# EUROPEAN PATENT APPLICATION

(11) **EP 3 885 192 A1**
(43) Date of publication of application: **29.09.2021**
(21) Application number: 21162554.6
(22) Date of filing: 15.03.2021
(51) Int. Cl.: B60P 3/40, B63B 35/00, F03D 13/40, B63B 25/22, B63B 25/28, B65D 19/00

(54) **METHOD OF LOADING WIND TURBINE COMPONENTS TO A MARITIME VESSEL**

(30) Priority: 16.03.2020 DK PA202000343; 25.03.2020 DK PA202070185
(71) Applicant: Blue Water Shipping A/S, 6700 Esbjerg (DK)
(72) Inventor: JENSEN, Per, 6800 Varde (DK)
(74) Representative: Zacco Denmark A/S

(57) **Abstract**

The invention relates to method of loading wind turbine components to a maritime vessel, the method comprising:
- preparing one or more wind turbine main components (11, 12, 13) in a back area (30) away from a quayside (31);
- placing a number of wind turbine main components (11, 12, 13) on an upper side (20) of a transport module (1);
- position at least two self-propelled modular transporters (SPMT's) (2) in tunnel-shaped grooves (22) in an underside (21) of the transport module (1); and
- lifting, from the ground the transport module (1) comprising the one or more wind turbine main components (11, 12, 13) by a number of SPMT's (2) and moving the transport module (1) from the back area (30) across the quayside (31) and onto a deck (8) of a feeder vessel (7) moored at the quayside (31).

The invention further relates to a transport module (1) configured for transport of wind turbine main components (11, 12, 13), the transport module (1) comprising an upper side (20) for supporting wind turbine main components (11, 12, 13), two parallel sides (23), two parallel ends (24) and an underside (21), in which underside (21) two and preferable three tunnel-shaped grooves (22) are formed.

## Description

The invention relates to a method of loading wind turbine components to a maritime vessel according to claim 1.

The invention also relates to a transport module for carrying out the method.

### Background

A common technique used for transporting wind turbine main components from shore to an erection site at sea has been use of standard heavy lift transport means as trucks and vessels until arrival at the large preassembly site where to components have been made ready for pick up and final transport by a large jack up installation vessel.

In the prior art, an installation vessel jacks up along a quayside with a risk of damaging the quay and/or a bottom of a harbour by lowering spuds into the harbour bottom.

An installation vessel should be understood as a vessel capable of erecting and assembling of the wind turbine on an offshore installation site. The installation vessel is provided with jack-up means for stabilizing a position of the vessel and one or more cranes for handling the wind turbine components.

The installation vessel is loaded and unloaded, for example, by means of a crane placed on the quay. The crane then lifts the load and sets it down on the vessel, on which it is then attached. The disadvantage of this, however, is that a corresponding crane must be available and the loading process itself is quite complicated, since manoeuvring the large loads using a heavy-duty crane in the area of a quay is always a great challenge. Furthermore, not all quays offer a footprint necessary for such cranes. The use of a crane is always a break in the transport chain, which is logistically and therefore economically disadvantageous.

The crane can also be a crane integrated on the installation vessel.

The object of the present invention is therefore to provide a method by which the loading of wind turbine main components is simplified and in particular is possible in a shorter time, so that costs are reduced.

This is achieved by a method, the method comprising:
- Preparing one or more wind turbine main components in a back area away from a quayside;
- placing a number of wind turbine main components on an upper side of a transport module;
- position at least two self-propelled modular transporters (SPMT's) in tunnel-shaped grooves in an underside of the transport module;
- lifting, from the ground the transport module comprising the one or more wind turbine main components by a number of SPMT's and moving the transport module from the back area across the quayside and onto a deck of a feeder vessel moored at the quayside;

In an embodiment the method further comprises:
lowering the transport module into position on a number of protrusions and/or openings of the deck, corresponding to a number of openings and/or protrusions of the transport module, securing the transport module to the deck of the feeder vessel in relation to lateral displacement;

In an embodiment, a further temporary harbour is established at sea, for reloading wind turbine main components from feeder vessel to an installation vessel via the temporary harbour.

In an embodiment of the method, the transport module is provided with a cover, where the transport module comprising the one or more wind turbine main components is moved by a number of SPMT's from the back area to a mounting site for the cover.

The SPMT's lifts the transport module from the ground, moves the transport module to the mounting site for the cover, where the cover is placed in a distance above the ground providing enough space for the transport module loaded with the wind turbine main components to enter the cover. To hold the cover in a distance above the ground, a number of protrusions extends out from sides of the cover, which protrusions are configured to rest on a number of support platforms. When the transport module is in position within the cover, the SPMT's lifts the transport module until bottoms of the sides of the cover are supported by the upper side of the transport module and further until the cover is lifted free and no longer is supported by the support platforms.

Hereby is achieved a method making it possible to shield the wind turbine components from rain and dust and the like, both during storing at harbour waiting on shipment and during sea travel by a feeder vessel.

This is also achieved by a transport module configured for transport of wind turbine main components, the transport module comprising an upper side for supporting wind turbine main components, two parallel ends and an underside, in which underside two and preferable three tunnel-shaped grooves are formed.

Each tunnel-shaped groove is dimensioned to receive a number of self-propelled modular transporters (SPMT's), which SPMT's are capable of lifting the transport platform including the wind turbine main components and move the transport platform on a substantially plane surface.

In an embodiment, the grooves extends from one end to an opposite end of the transport platform.

Hereby it is possible to move the transport platform from a back area of a harbour to a quayside and further from the quayside on board a feeder vessel.

The transport module is provided with an adapter system, which adapters makes it possible to use same transport module for transporting wind turbine main components such as towers in a vertical position, a number of nacelles, racks for holding a number of wind turbine blades, and large transition pieces for the tower sections. The transition pieces are transitions between a monopile forming the base resting at a sea bottom and the tower of the wind turbine.

An interface for the adapter system is formed in the upper side of the transport module, and is provided by a number of holes and or tracks (for example T-tracks) enabling fastening of adapters to the transport modules.

The feeder vessel can be a self-propelled vessel or a barge, which barge can be propelled by one or more tugs or other maritime vessels.

The feeder vessel or barge usually has a deck and a hull, with the loads being transported on deck.

This makes it possible to move the large loads from a suitably equipped quay onto the feeder vessel using SPMT vehicles. Driving or rolling the wind turbine main components on-board by use of SPMT's provides a swift handling for the heavy loads, so that time-consuming manoeuvring by crane is not necessary. The term "heavy" loads are understood here to mean masses in the range from 100 to 2,000 tons or more. In the present application, the term "quay" also means quays, piers, jetties and bridges.

The deck of the feeder vessel is preferably essentially closed. No loading space is preferably provided. The deck preferably has a basic shape that is expedient for receiving loads, showing a flat rectangular basic shape. Of course, the deck can also have other basic shapes.

Lashing means is provided for securing transport modules in relation to lateral displacement on the deck during travel of the feeder vessel at sea. Such lashing means can be provided by one or more twist-locks (not shown) as known from securing intermodal containers to vehicles, which twist-locks are adapted in scale to a heavier load.

Also lashing means is provided for securing the transport modules in relation to movement in a direction perpendicular to the deck. Such lashing means can be provided by longitudinal lines or rows of pins having a conical top, also called "king pins" to fit into corresponding openings in the underside of the transport module. Hereby the transport module is secured from moving in horizontal direction in relation to the deck.

The pins being conical at the top portion, provides an expedient centring of the pins in the corresponding openings in the transport modules, when lowering the transport modules into position on the deck of the feeder vessel.

In an embodiment, receiving means for the pins can be ear shaped mounting brackets having a hole corresponding to a diameter of the pin, which brackets extends flush with the underside of the transport module and away from the side of the transport module.

Further, the deck area of the feeder vessel, can be fitted with adjustable locking pawls, for example in shape of sliding cleats (not shown), which cleats can be entered into corresponding openings in the sides of the transport modules in order to secure for "tipping" forces i.e., preventing vertical movement in relation to the deck.

An example of lashing means with a locking feature can be analogue twist-locks or tight-locks, as are often used in the shipping sector (in particular container shipping).

The feeder vessel is provided with a ballasting system with one, two or more ballast water pumps and several ballast water tanks, for compensating for trim movements, but also - in the freely floating state - for heeling movements of the vessel during loading of the wind turbine main components, the ballasting system being set up not only for trimming - and compensate for heeling movements of the vessel, but preferably also to keep the deck flush with an upper side of the quay. By use of the ballast system, it is possible to counteract any unwanted trimming and / or heeling movement of the feeder vessel.

Hereby it is possible to roll on/roll off transport modules loaded with heavy wind turbine main components on/to a feeder vessel without use of mooring equipment different from ordinary mooring means such as berth bollards, ropes or wires.

In an embodiment, the transport module is provided with a cover. The cover comprises a roof part and a pair of parallel sides and having substantially same width as the transport module, so bottoms of each side of the cover can rest on the upper side of the transport module. An end of the cover is closed and the opposite end can be opened and closed by a hard or flexible wall or door/gate making possible for the wind turbine main components loaded on the transport module to enter the cover, where the transport module forms a kind of bottom of the enclosure. When the wind turbine main components loaded on the transport module are in place within the cover, the opening of the cover is closed and the wind turbine main components are shielded within the cover.

In an embodiment of the cover, both ends can be opened and closed by a hard or flexible wall.

From the parallel sides a number of protrusions extends away from the sides. The protrusions are configures for resting on a number of supporting platforms, which platforms holds the cover in a distance above the ground surface making possible for the transport module to be placed under the cover.

With the transport module in place under the cover, the SPMT's raises their platforms, thereby lifting the transport module into engagement with the cover.

In an embodiment, the cover is provided with a number of locking means for securing the cover to the transport module to prevent wind from displacing the cover in relation to the transport module. Especially at sea, the wind can be a challenge.

Hereby is achieved a cover for shielding wind turbine main components waiting for shipping out to a temporary harbour at sea or to an installation vessel.

The above and other features and advantages of the present invention will become readily apparent to those skilled in the art by the following detailed description of exemplary embodiments thereof with reference to the attached drawings, in which:

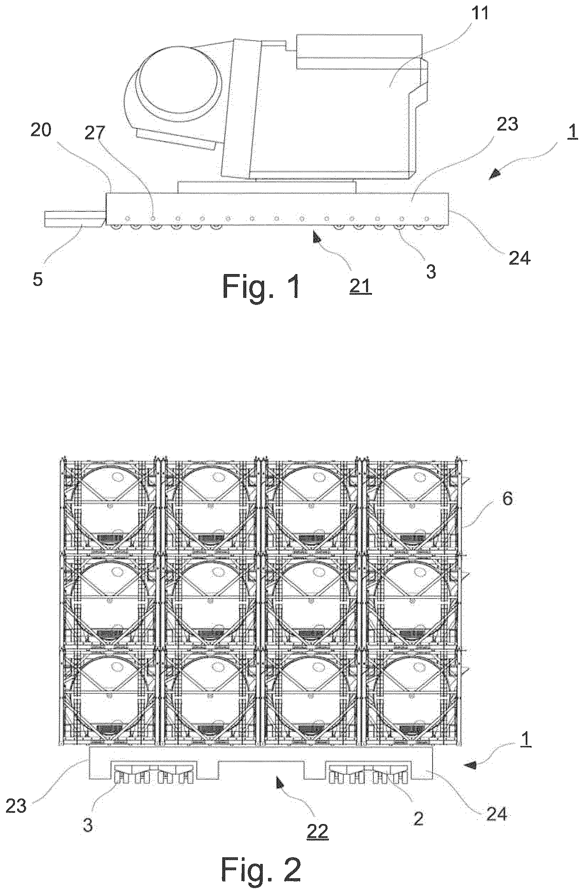

Figure 1 shows schematically an example of a transport module moving one or more wind turbine nacelles;
Figure 2 shows schematically an example of a transport module for moving wind turbine blades placed in racks;

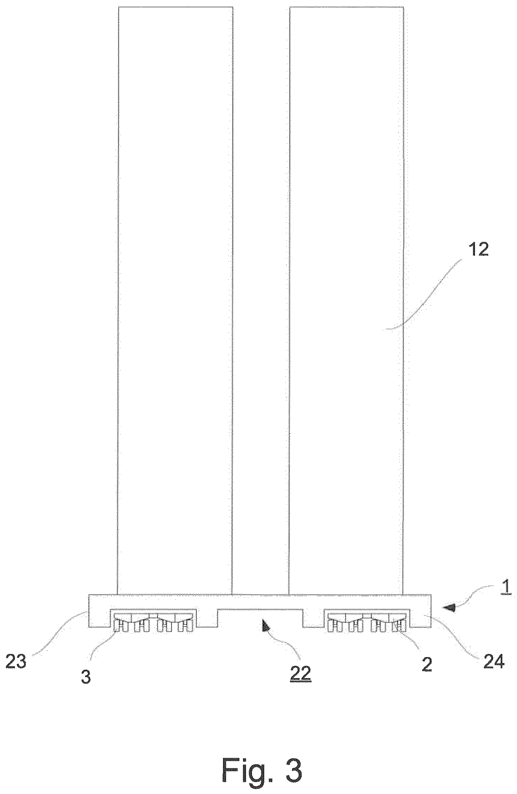

Figure 3 shows schematically an example of a transport module moving tower segments in vertical position;

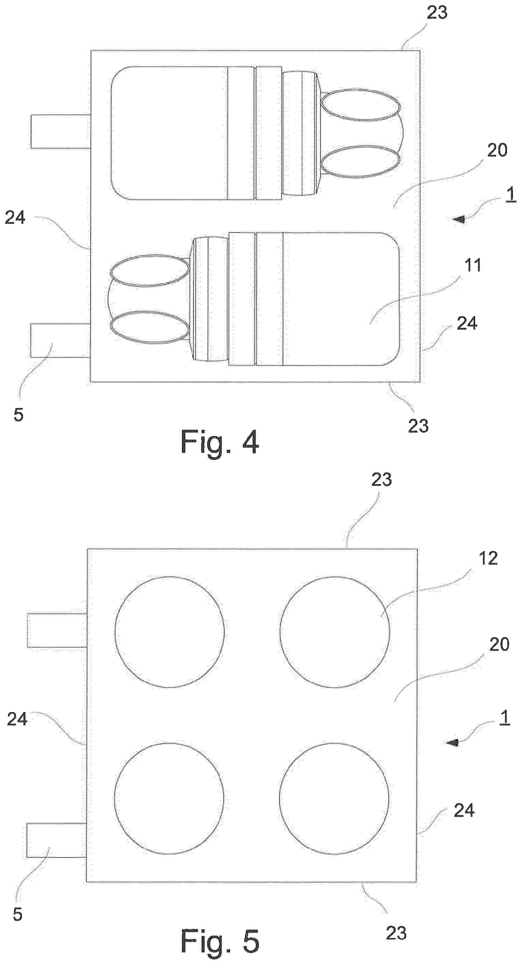

Figure 4 shows schematically an example of a transport module moving two wind turbine nacelles, seen from above;
Figure 5 shows schematically an example of a transport module moving four tower segments in vertical position, seen from above;

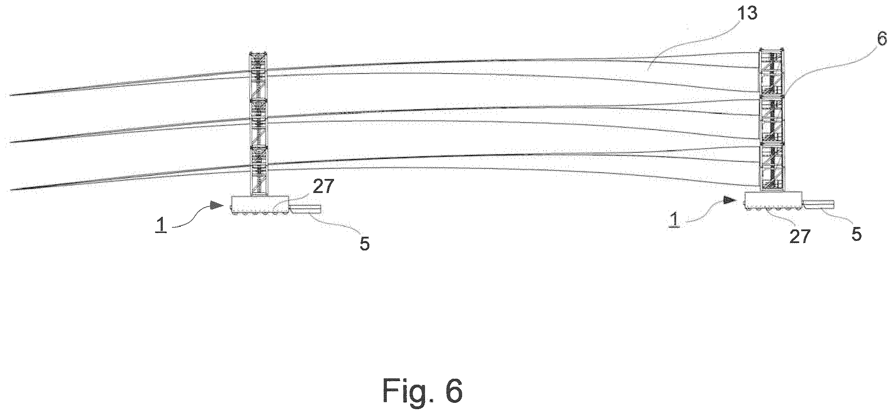

Figure 6 shows schematically an example of transport modules for moving wind turbine blades placed in racks, shown from a side;

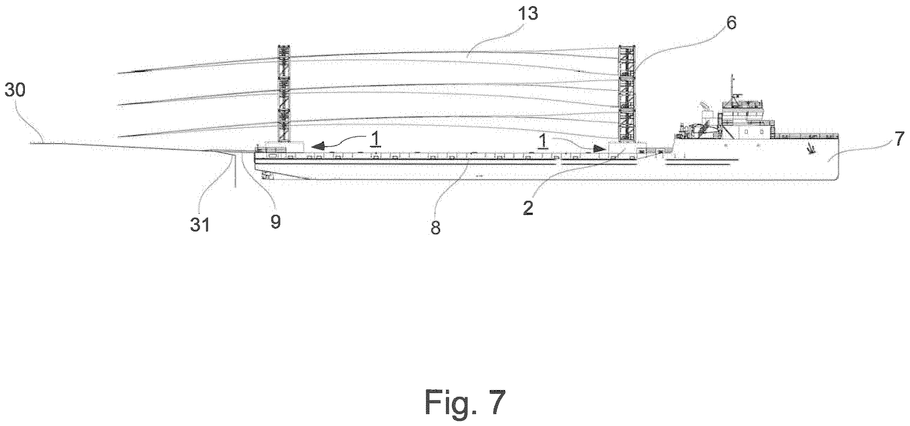

Figure 7 shows schematically an example of transport modules for moving wind turbine blades placed in racks, which transport modules are placed on a feeder vessel;
Figure 8 illustrates a transport module before being lowered into position on the deck;
Figure 9 illustrates a transport module lowered into position on the deck with lashing or locking means in locking position;

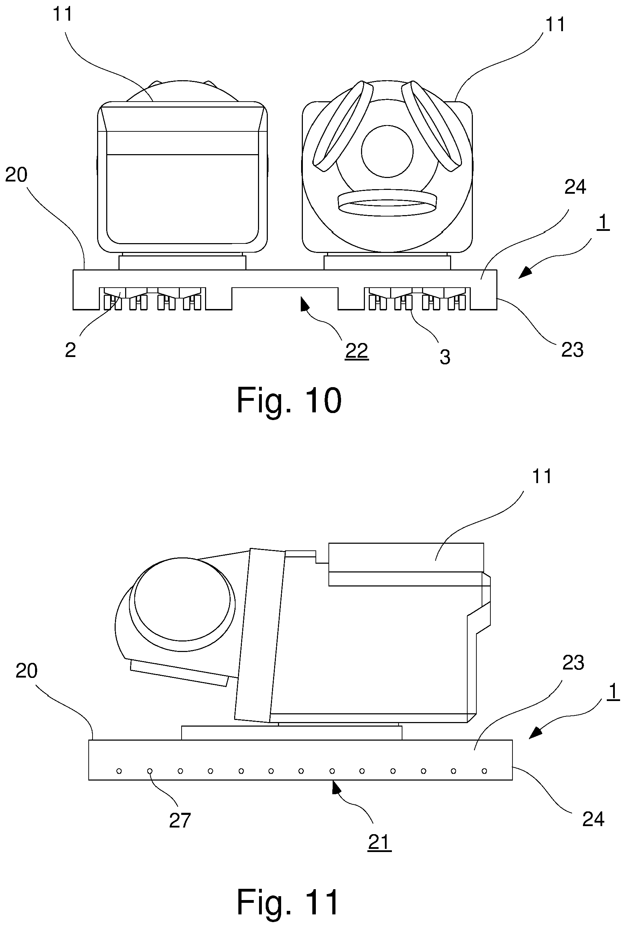

Figure 10 illustrates a transport module loaded with a pair of wind turbine nacelles, ready to be moved;
Figure 11 shows a side view of a transport module loaded with a wind power nacelle;

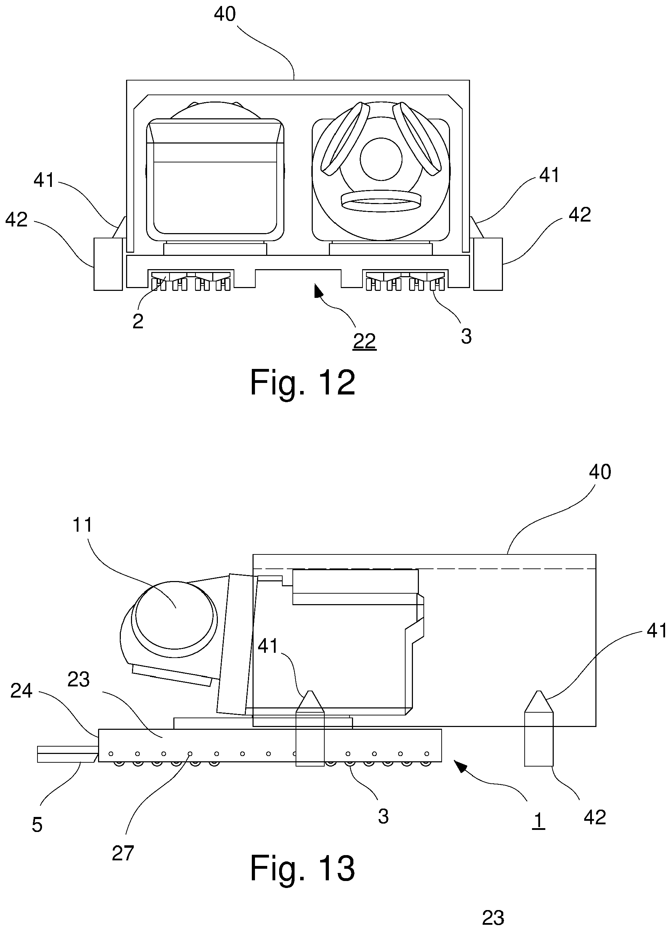

Figure 12 illustrates a transport module loaded with a pair of wind turbine nacelles being placed in a cover section;
Figure 13 illustrates a transport module loaded with wind turbine nacelles being entering a cover section;

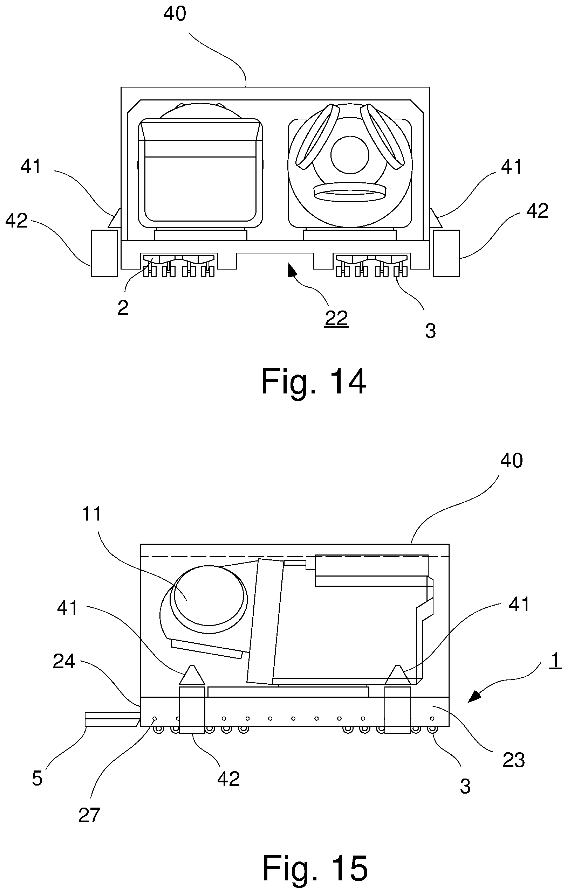

Figure 14 illustrates a transport module loaded with a pair of wind turbine nacelles engaging the cover section;
Figure 15 illustrates a transport module loaded with wind turbine nacelles engaging the cover section and lifting the cover from a number of support platforms;

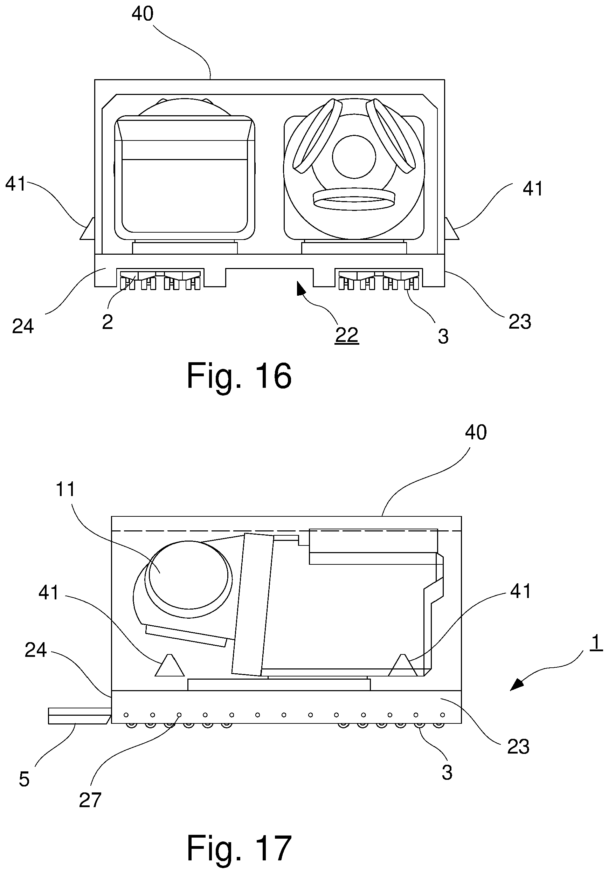

Figure 16 illustrates a transport module loaded with a pair of wind turbine nacelles with the cover section mounted and ready to be moved; and
Figure 17 illustrates a transport module loaded with a pair of wind turbine nacelles with the cover section mounted, the cover is shown transparent.

Various embodiments are described hereinafter with reference to the figures. Like reference numerals refer to like elements throughout. Like elements will, thus, not be described in detail with respect to the description of each figure.

It should also be noted that the figures are only intended to facilitate the description of the embodiments.

They are not intended as an exhaustive description of the claimed invention or as a limitation on the scope of the claimed invention. In addition, an illustrated embodiment needs not have all the aspects or advantages shown.

An aspect or an advantage described in conjunction with a particular embodiment is not necessarily limited to that embodiment and can be practiced in any other embodiments even if not so illustrated, or if not so explicitly described.

Throughout, the same reference numerals are used for identical or corresponding parts.

According to an aspect of the invention, a method of assembling or preparing and transporting wind turbine main components 11, 12, 13 from shore to an erection site at sea is disclosed.

To carry out the method one or more wind turbine main components 11, 12, 13 are prepared in a back area 30 placed ashore and away from a quayside 31. The back area should be understood as an area for preparing the wind turbine main components, said area being situated ashore and not being the quayside. Such wind turbine main components 11, 12, 13 can be nacelles 11, tower segments 12, wind turbine blades 13 or large transition pieces (not shown) for the tower sections. The transition pieces are transitions between a monopile forming the base resting at a sea bottom and the tower of the wind turbine. The wind turbine blades 13 are placed in a number of racks 6, each rack 6 is secured to a transport module 1. After wind turbine main components 11, 12, 13 are prepared or during preparation of the wind turbine main components 11, 12, 13, they are placed on an upper side 20 of a transport module 1. For transporting or moving the transport module 1, at least two self-propelled modular transporters (SPMT's) are positioned in tunnel-shaped grooves 22 in an underside 21 of the transport module 1. The SPMT's are wheeled transport vehicles each having a plurality of wheels 3. On an upper side of the SPMT's a large flat platform is capable of carrying and lifting heavy and large loads. SPMT's are often used in shipyards for transporting sections of ships from an assembly area to a dock, where a ship is build.

The wheel arrangement of the SPMT's are configured for raising and lowering the platform of the SPMT's in relation to the ground on which it is moving in such a way that it is possible for the SPMT to lower the platform to be able to enter one of the tunnel-shaped openings 22 in the underside 21 of the transport module 1.

Depending on the weight of the wind turbine main components placed on the transport platform, a suitable number of SPMT's are used. The SPMT's are preferably placed as long as possible from a centreline of the transport platform in order to achieve a stable transport when moving across the ground at a harbour facility from a back area 30 over a quayside 31 and on board a feeder vessel 7.

The SPMT's are provided with a power and control module 5, which module makes it possible to coordinate each SPMT with the others, thereby controlling all SPMT's assigned to the specific task.

When the transport module 1 is provided with two tunnel-shaped grooves 22 in the underside 21, the grooves 22 are positioned as close to the edges 23 as possible. The grooves 22 extends between ends 24 of the transport module 1.

When the SPMT's are in place, the transport module comprising the one or more wind turbine main components is lifted from the ground by a number of SPMT's and the transport module is moved from the back area 30 across the quayside 31 and onto a deck 8 of the feeder vessel 7 moored at the quayside 31.

In an embodiment of the method, the transport module 1 is provided with a cover 40, where the transport module 1 comprising the one or more wind turbine main components 11, 12, 13 is moved by a number of SPMT's 2 from the back area 30 to a mounting site (not shown) for the cover 40.

The SPMT's 2 lifts the transport module 1 from the ground, moves the transport module 1 to the mounting site for the cover 40, where the cover 40 is placed in a distance above the ground providing enough space for the transport module 1 loaded with the wind turbine main components 11, 12, 13 to enter the cover 40. To hold the cover 40 in a distance above the ground, a number of protrusions 41 extends out from sides of the cover 40, which protrusions 41 are configured to rest on a number of support platforms 42. When the transport module 1 is in position within and under the cover 40, the SPMT's 2 lifts the transport module 2 until bottoms of the sides of the cover 40 are supported by the upper side 20 of the transport module 1 and further until the cover 40 is lifted free and no longer is supported by the support platforms 42.

The feeder vessel 7 is levelled by use of a ballasting system of commonly known type (not shown) with one, two or more ballast water pumps and several ballast water tanks, for compensating for trim movements, but also - in the freely floating state - for heeling movements of the vessel 7 during loading of the wind turbine main components 11, 12, 13, the ballasting system being set up not only for trimming - and compensate for heeling movements of the vessel, but preferably also to keep the deck 8 flush with an upper side of the quay 31. By use of the ballast system, it is possible to counteract any unwanted trimming and / or heeling movement of the feeder vessel 7.

In an embodiment, the feeder vessel 7 can be provided with a loading ramp 9, which loading ramp 9 can be lowered or extended from the feeder vessel 7 for abutment on the quay 31.

In another embodiment, the loading ramp 9 is fastened movable to the quay 31 in such a way that the ramp 9 can be lowered or extended from the quay 31 to the feeder vessel 7, for abutment on the deck 8.

When the transport module is moved onto the feeder vessel 7, the transport module 1 is lowered into position on a number of protrusions and/or openings (not shown) of the deck 8, corresponding to a number of openings and/or protrusions (not shown) of the transport module 1, securing the transport module 1 to the deck 8 of the feeder vessel 7 in relation to lateral displacement.

Locking and securing the transport module 1 to the deck 8 of the feeder vessel 7 can be provided by one or more twist-locks (not shown) as known from securing intermodal containers to vehicles, which twist-locks are adapted in scale to a heavier load.

Locking and securing the transport module 1 to the deck 8 of the feeder vessel 7 can also be provided by longitudinal lines or rows of pins 25 having a conical top portion, also called "king pins" to fit into corresponding openings in the underside 21 of the transport module 1. Hereby the transport module 1 is secured from moving in horizontal direction in relation to the deck 8.

The pins 25 being conical at the top portion, provides an expedient centring of the pins 25 in the corresponding openings in the transport modules 1, when lowering the transport modules 1 into position on the deck 8 of the feeder vessel 7.

In an embodiment, receiving means for the pins 25 can be ear shaped mounting brackets having a hole corresponding to a diameter of the pin 25, which brackets extends flush with the underside 21 of the transport module 1 and away from the side 23 of the transport module 1.

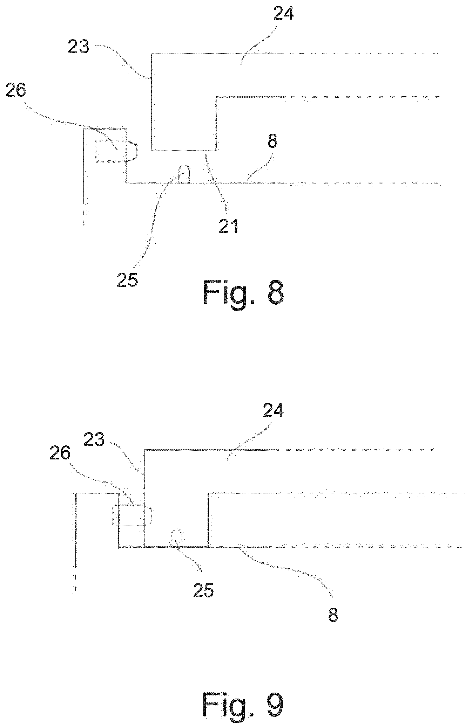

Further, the deck area 8 of the feeder vessel 7, can be fitted with adjustable locking pawls 26, for example in shape of sliding cleats as illustrated in Figures 8 and 9, which cleats 26 can be entered into corresponding openings in the sides 23 of the transport modules 1 in order to secure for "tipping" forces i.e., preventing vertical movement in relation to the deck 8.

The cleats 26 can be moved by use of hydraulic or pneumatic means or by electric actuators.

In a simple manner, the transport modules 1, can additionally be secured to the deck 8 by common lashing means.

In an embodiment, the transport module 1 is provided with a cover 40. The cover 40 comprises a roof part and a pair of parallel sides, the cover 40 having substantially same width as the transport module 1, so bottoms of each side of the cover 40 can rest on the upper side 20 of the transport module 1. An end of the cover 40 is closed and the opposite is open and can be opened and closed by a hard or flexible wall or door/gate making possible for the wind turbine main components 11, 12, 13 loaded on the transport module 1 to enter the cover 40, where the transport module 1 forms a kind of bottom of an enclosure comprising the cover 40 and the transport module 1. When the wind turbine main components 11, 12, 13 loaded on the transport module are in place within the cover 40, the opening of the cover 40 is closed and the wind turbine main components 11, 12, 13 are shielded within the cover 40.

In an embodiment of the cover 40, both ends can be opened and closed by a hard or flexible wall or door/gate.

From the parallel sides a number of protrusions 41 extends away from the sides of the cover 40. The protrusions 41 are configured for resting on a number of supporting platforms 42, which platforms 42 holds the cover 40 in a distance above the ground surface making possible for the transport module 1 to be placed under the cover 40.

With the transport module 1 in place under the cover 40, the SPMT's 2 raises their platforms, thereby lifting the transport module 1 into engagement with the cover 40.

In an embodiment, the cover 40 is provided with a number of locking means (not shown) for securing the cover 40 to the transport module 1 to prevent wind from displacing the cover 40 in relation to the transport module 1. Especially at sea, the wind can be a challenge.

Locking or lashing means for securing the cover 40 to the transport module 1, can be provided by means similar to means for locking hatches on ships or means for securing cargo, for example containers on ships.

In an embodiment the locking or lashing means for securing the cover 40 to the transport module 1 is provided by a number of pins (not shown) having a conical free end, which pins extends downwards from the bottoms of the sides of the cover 40. When raising the transport module 1 positioned under the cover 40, the pins enters into corresponding holes in the upper side 20 of the transport module 1. Hereby the cover 40 is secured from moving in horizontal direction in relation to the transport module 1.

The pins being conical at the free end, provides an expedient centring of the pins in the corresponding openings in the upper side 20 of the transport modules 1, when raising the transport modules 1 into position and lifting the cover 40 from the support platforms 42.

Securing the cover from moving in vertical direction or prevent the cover 40 from tipping in relation to the transport module 1, also common locking or lashing means can be used.

In an expedient embodiment, the pins used for securing the cover 40 from moving in horizontal direction in relation to the transport module 1, can be provided with flanges, which flanges enters into corresponding openings. When entered, the pins are turned along a longitudinal axis until the flanges is no longer positioned aligned with the openings. Hereby the cover is secured in relation to movement in horizontal and in vertical direction.

In an embodiment, the pins can be provided at the transport module and the corresponding openings can be provided in the cover 40.

In an embodiment, the locking means can be so called twist-locks known from transporting intermodal containers.

The cover 40 is dimensioned after the type of wind turbine main component to be shielded on the transport module 1.

In an embodiment, the cover 40 is dimensioned for shielding a number of wind turbine nacelles on the transport module 1.

In an embodiment prior to preparing one or more wind turbine main components 11, 12, 13 in a back area 30, or placing a number of wind turbine main components 11, 12, 13 on an upper side 20 of a transport module 1, a temporary- or floating harbour is established within driving distance of the SPMT's 2, to which temporary- or floating harbour the feeder vessel 7 is moored.

In an embodiment a further temporary harbour is established at sea, for reloading wind turbine main components 11, 12, 13 from feeder vessel 7 to an installation vessel via the temporary harbour.

## Claims

1. A method of loading wind turbine components to a maritime vessel, the method comprising:
- preparing one or more wind turbine main components (11, 12, 13) in a back area (30) away from a quayside (31);
- placing a number of wind turbine main components (11, 12, 13) on an upper side (20) of a transport module (1);
- position at least two self-propelled modular transporters (SPMT's) (2) in tunnel-shaped grooves (22) in an underside (21) of the transport module (1); and
- lifting, from the ground the transport module (1) comprising the one or more wind turbine main components (11, 12, 13) by a number of SPMT's (2) and moving the transport module (1) from the back area (30) across the quayside (31) and onto a deck (8) of a feeder vessel (7) moored at the quayside (31).

2. The method according to claim 1, further comprising:
- lowering the transport module (1) into position on a number of protrusions and/or openings of the deck, corresponding to a number of openings and/or protrusions of the transport module (1), securing the transport module (1) to the deck (8) of the feeder vessel (7) in relation to lateral displacement.

3. The method according to claim 1 or 2, wherein prior to preparing one or more wind turbine main components (11, 12, 13) in a back area (30), or placing a number of wind turbine main components (11, 12, 13) on an upper side (20) of a transport module (1), a temporary- or floating harbour is established within driving distance of the SPMT's (2), to which temporary- or floating harbour the feeder vessel (7) is moored.

4. The method according to any one or more of the foregoing claims, wherein a further temporary harbour is established at sea, for reloading wind turbine main components (11, 12, 13) from feeder vessel (7) to an installation vessel via the temporary harbour.

5. A transport module (1) configured for transport of wind turbine main components (11, 12, 13), the transport module (1) comprising an upper side (20) for supporting wind turbine main components (11, 12, 13), two parallel sides (23), two parallel ends (24) and an underside (21), **characterised in that** two and preferable three tunnel-shaped grooves (22) are formed in the underside (21) of the transport module (1).

6. The transport module according to claim 5, **characterised in that** a number of openings (27) is provided in the side (23) of the transport module (1) for engagement with a number of locking pawls (26).

7. The transport module according to claim 6, **characterised in that** the openings (27) are circular.

8. The transport module according to claim 6, **characterised in that** the openings (27) are rectangular.

9. The transport module according to any one or more of the foregoing claims 5 to 8, **characterised in that** a number of openings is provided in the underside (21) of the transport module (1) for engagement with a number of pins or lockable pins (25)

10. The transport module according to claim 9, **characterised in that** the openings are circular.

11. The transport module according to any one of the claims 5 - 10, **characterized in that** the transport module (1) is provided with a cover (40) comprising a pair of side walls.

12. The transport module according to any one of the claims 5 - 11, **characterized in that** the cover is provided with a number protrusions (41) extending away from sides of the cover (40), which protrusions (41) are configured for resting on a number of supporting platforms (42).

13. The transport module according to any one of the claims 5 - 12, **characterized in that** the cover (40) is provided with locking or lashing means for securing the cover (40) to the transport module (1) by a number of pins having a conical free end, which pins extends downwards from bottoms of the sides of the cover (40).

14. The transport module according to claim 13, **characterized in that** the pins used for securing the cover (40) from moving in horizontal direction in relation to the transport module (1), is provided with flanges for entering into corresponding openings in the upper side (20) of the transport module (1).
